# EUROPÄISCHE PATENTANMELDUNG

(11) **EP 3 680 440 A1**
(43) Veröffentlichungstag der Anmeldung: **15.07.2020**
(21) Anmeldenummer: 20150856.1
(22) Anmeldetag: 09.01.2020
(51) Int. Cl.: E06B 3/66, E06B 3/663, F21K 9/61, F21V 33/00, F21V 8/00, F21Y 115/10

(54) **BELEUCHTUNGSEINRICHTUNG MIT HALTERUNG FÜR BELEUCHTUNGSQUELLE UND VERWENDUNG HIERVON**

(30) Priorität: 11.01.2019 DE 102019100630
(71) Anmelder: Green Building R&D GmbH, 40545 Düsseldorf (DE)
(72) Erfinder: MÜLLER, Helmut Frank Ottomar, 40625 Düsseldorf (DE)
(74) Vertreter: Cohausz & Florack

(57) **Zusammenfassung**

Die vorliegende Erfindung betrifft eine Beleuchtungseinrichtung (1, 1') mit einer Beleuchtungsquelle (2) und einer Scheibenanordnung (4) zumindest umfassend einen im Wesentlichen flächigen Lichtleiter (4a), in den Licht der Beleuchtungsquelle (2) eingekoppelt werden kann. Die Beleuchtungseinrichtung ist dadurch gekennzeichnet, dass die Beleuchtungseinrichtung (1, 1') weiterhin eine Halterung (6)für die Beleuchtungsquelle (2) aufweist, wobei die Halterung (6) einen im Inneren der Halterung (6) ausgebildeten Aufnahmebereich (8) zur Aufnahme der Beleuchtungsquelle (2) umfasst, und wobei die Halterung (6) in einen Randverbund (10) der Scheibenanordnung (4) integriert ist.

## Beschreibung

Die vorliegende Erfindung betrifft eine Beleuchtungseinrichtung mit einer Beleuchtungsquelle und einer Scheibenanordnung zumindest umfassend einen im Wesentlichen flächigen Lichtleiter, in den Licht der Beleuchtungsquelle eingekoppelt werden kann.

Gattungsgemäße Beleuchtungseinrichtungen sind aus dem Stand der Technik bekannt. So offenbart beispielsweise die DE 10 2016 118 885 A1 eine Lichtumlenkvorrichtung, welche zur Lichtumlenkung für eine möglichst blendenfreie Innenbeleuchtung von Räumen verwendet wird. Die Lichtumlenkvorrichtung dient in diesem Fall zur optimierten Ausnutzung des auf eine Fensterfläche fallenden Tageslichts, indem das einfallende Tageslicht bei seitenbelichteten Räumen derart umgelenkt wird, dass eine bessere Ausleuchtung der Raumtiefe erreicht wird.

Steht allerdings nicht genügend Tageslicht zur Verfügung, wird beschrieben, dass der Einsatz von künstlichen Lichtquellen oder Beleuchtungsquellen notwendig ist. Hierzu wird über den Rand eines flächigen transparenten Lichtleiters, welcher beispielsweise eine Fensterscheibe oder ein Teil hiervon sein kann, Licht eingekoppelt und mittels einer bestimmten Oberflächenstruktur flächig wieder ausgekoppelt. Um die Transparenz (insbesondere bei Fensterscheiben) nicht zu beeinträchtigen und gleichzeitig eine homogene Lichtauskopplung zu erreichen, sind die Strukturen als Mikrostrukturen vorgesehen.

Problematisch bei derartigen Varianten mit künstlichem Licht ist insbesondere die Realisierung von verlässlichen und reproduzierbaren Beleuchtungseigenschaften, wie beispielsweise einer gewünschten Abstrahlcharakteristik. Gleichzeitig muss die Beleuchtungseinrichtung den typischerweise auftretenden thermischen und mechanischen Beanspruchungen der Beleuchtungseinrichtung (beispielsweise wenn diese in einem Fenster oder einer Trennwand integriert ist) standhalten. Hinzu kommt, dass beim Betrieb der Beleuchtungsquelle Abwärme entsteht, die verlässlich abgeführt werden muss. Schließlich muss die Beleuchtungseinrichtung auch den räumlichen Gegebenheit, beispielsweise bei der Verwendung der Beleuchtungseinrichtung in einem Fenster oder als Fenster, genügen und darf der jeweiligen Verwendung beispielsweise durch einen zu hohen Platzbedarf nicht entgegenstehen.

Hiervon ausgehend stellt sich der Erfindung die Aufgabe, eine gattungsgemäße Beleuchtungseinrichtung anzugeben, mit der verlässliche Beleuchtungseigenschaften auf einfache Weise realisierbar sind und die die Anforderungen bei unterschiedlichen Verwendungen, wie etwa als Fenster, Trennwand, Deckenelement oder freistehendes Glaselement, erfüllt.

Gemäß einem ersten Aspekt der vorliegenden Erfindung wird die Aufgabe dadurch gelöst, dass die Beleuchtungseinrichtung weiterhin eine Halterung für die Beleuchtungsquelle aufweist, wobei die Halterung einen im Inneren der Halterung ausgebildeten Aufnahmebereich zur Aufnahme der Beleuchtungsquelle umfasst, und wobei die Halterung in einen Randverbund der Scheibenanordnung integriert ist.

Es hat sich herausgestellt, dass bereits die verlässliche Positionierung der Beleuchtungsquelle maßgeblichen Einfluss auf die Beleuchtungseigenschaften der Beleuchtungseinrichtung haben kann. So können die Beleuchtungseigenschaften bereits maßgeblich bei der Einkopplung des Lichts beeinflusst werden. Ist die Beleuchtungsquelle beispielsweise versetzt oder schief angeordnet, können die Beleuchtungseigenschaften der Beleuchtungseinrichtung unerwünscht verändert und im Ergebnis negativ beeinflusst werden.

Durch das Vorsehen einer Halterung für die Beleuchtungsquelle, wobei die Beleuchtungsquelle in einem Aufnahmebereich im Inneren der Halterung aufgenommen wird, kann die Beleuchtungsquelle verlässlich in einer vordefinierten Position und Lage angeordnet werden.

Weiterhin wird durch die Integration der Halterung in den Randverbund der Scheibenanordnung eine vorteilhafte Positionierung der Beleuchtungsquelle in unmittelbarer Nähe zum Lichtleiter erreicht. Die Integration der Halterung in den Randverbund führt zudem vorteilhaft dazu, dass die Beleuchtungsquelle äußerst platzsparend in der Beleuchtungseinrichtung angeordnet werden kann, sodass sich diese insbesondere für Verwendungen eignet, bei denen bestimmte Maße vorgegeben sind oder nur wenig Platz zur Verfügung steht, beispielsweise bei der Verwendung in einem Fenster. Beispielsweise kann die Halterung derart in dem üblicherweise ohnehin vorhandenen Randverbund integriert sein, dass die Halterung nicht über die Scheiben bzw. den ohnehin vorhandenen Randverbund der Scheibenanordnung herausragt.

Die Beleuchtungsquelle kann durch unterschiedliche Leuchtmittel realisiert sein. Vorzugsweise basiert die Beleuchtungsquelle auf LED-Technik, wie im Folgenden noch genauer beschrieben wird. Es können jedoch grundsätzlich auch andere Leuchtmittel zum Einsatz kommen.

Der im Wesentlichen flächige Lichtleiter ist beispielsweise eine Scheibe der Scheibenanordnung. Die Scheibenanordnung kann beispielsweise ausschließlich den flächigen Lichtleiter umfassen. Bevorzugt weist die Scheibenanordnung neben dem flächigen Lichtleiter jedoch noch (beispielsweise eine, zwei, drei oder mehr) weitere Scheiben auf. Ebenfalls kann mehr als ein Lichtleiter vorgesehen sein. Der Lichtleiter ist dabei in der Regel transparent ausgebildet. Auch können die Scheiben der Scheibenanordnung transparent ausgebildet sein (beispielsweise im Falle der Verwendung der Beleuchtungseinrichtung als Fenster). Es ist allerdings auch möglich, dass Scheiben der Scheibenanordnung beispielsweis auch teilopak ausgebildet sind (beispielsweise als Milchglas).

Der Randverbund der Scheibenanordnung kann beispielsweise Träger, Befestigungen, Kantenschutzelemente, Abstandshalter und/oder Dichtungselemente für die Scheiben bzw. den (zumindest einen) Lichtleiter umfassen. Insbesondere im Fall eines Mehrscheiben-Isolierglases kann der Randverbund Abstandshalter zur Beabstandung der einzelnen Scheiben und Dichtungselemente zur Isolierung des Hohlraums zwischen den einzelnen Scheiben umfassen.

Gemäß einer bevorzugten Ausgestaltung der erfindungsgemäßen Beleuchtungseinrichtung sind der Aufnahmebereich und die Beleuchtungsquelle derart aneinander angepasst, dass der Aufnahmebereich die Beleuchtungsquelle im Wesentlichen formschlüssig aufnimmt. Beispielsweise entspricht die (Innen-)Kontur des Aufnahmeraums in Wesentlichen der (Außen-)Kontur der darin anzuordnenden Beleuchtungsquelle. Hierdurch kann auf einfache Weise eine verlässliche Anordnung sowohl hinsichtlich der Position als auch hinsichtlich der Orientierung erreicht werden. Im Ergebnis können so verlässliche Abstrahleigenschaften der Beleuchtungseinrichtung erreicht werden.

Gemäß einer weiteren bevorzugten Ausgestaltung der erfindungsgemäßen Beleuchtungseinrichtung ist die Beleuchtungsquelle derart in dem Aufnahmebereich der Halterung aufgenommen, dass die Beleuchtungsquelle einen vordefinierten Abstand, eine vordefinierte Position und/oder eine vordefinierte Orientierung relativ zum flächigen Lichtleiter aufweist. Hierdurch wird eine optimale Anordnung der Beleuchtungsquelle zum Lichtleiter erreicht, was verlässliche Abstrahleigenschaften der Beleuchtungseinrichtung sicherstellt.

Gemäß einer weiteren bevorzugten Ausgestaltung der erfindungsgemäßen Beleuchtungseinrichtung ist die in dem Aufnahmebereich angeordnete Beleuchtungsquelle mit einem Abstand von weniger als 10 mm, vorzugsweise weniger als 5mm, weiter vorzugsweise weniger als 1mm von dem Lichtleiter angeordnet. Durch die Integration der Halterung in dem Randverbund der Scheibenanordnung können vergleichsweise geringe Abstände zwischen der Beleuchtungsquelle und dem Lichtleiter verlässlich realisiert werden. Die beschriebenen geringen Abstände erhöhen vorteilhaft die Menge des einkoppelbaren Lichts der Beleuchtungsquelle und damit die Effizienz der Beleuchtungseinrichtung.

Gemäß einer weiteren bevorzugten Ausgestaltung der erfindungsgemäßen Beleuchtungseinrichtung ist die in dem Aufnahmebereich angeordnete Beleuchtungsquelle im Querschnitt gesehen im Wesentlichen mittig vor dem Lichtleiter angeordnet ist. Mit der beschriebenen, in den Randverbund integrierten Halterung kann zuverlässig eine entsprechende relative Positionierung zwischen der Beleuchtungsquelle und dem Lichtleiter realisiert werden. Die beschriebene Anordnung erhöht dabei vorteilhaft die Menge des einkoppelbaren Lichts der Beleuchtungsquelle und damit die Effizienz der Beleuchtungseinrichtung.

Gemäß einer weiteren bevorzugten Ausgestaltung der erfindungsgemäßen Beleuchtungseinrichtung ist die in dem Aufnahmebereich angeordnete Beleuchtungsquelle im Querschnitt gesehen im Wesentlichen parallel zum Lichtleiter angeordnet. Unter einer parallelen Anordnung wird dabei insbesondere verstanden, dass die Lichtaustrittsfläche der Beleuchtungsquelle im Wesentlichen parallel zum Lichtleiter, da heißt zur der der Beleuchtungsquelle zugewandten Einkoppelkante des Lichtleiters, angeordnet ist. Auch in diesem Fall kann vorteilhaft die Menge des einkoppelbaren Lichts der Beleuchtungsquelle und damit die Effizienz der Beleuchtungseinrichtung optimiert werden.

Im Ergebnis kann durch die beschriebene, in den Randverbund integrierte Halterung ein möglichst kleiner Abstand, und eine mittige und parallele Anordnung der Beleuchtungsquelle erreicht werden.

Gemäß einer weiteren bevorzugten Ausgestaltung der erfindungsgemäßen Beleuchtungseinrichtung umgibt die Halterung die Beleuchtungsquelle im Wesentlichen vollständig. Darunter, dass die Halterung die Beleuchtungsquelle im Wesentlichen vollständig umgibt, wird insbesondere verstanden, dass die Halterung bis auf notwendige Öffnungen, wie etwa eine Durchführung für elektrische Leitungen oder eine Öffnung für den Lichtaustritt, ein im Wesentlichen geschlossenes Gehäuse für die Beleuchtungseinrichtung bildet. Dies begünstigt sowohl eine verlässliche Positionierung als auch eine hohe Wärmeableitung der durch den Betrieb der Beleuchtungsquelle entstehenden Wärme.

Gemäß einer weiteren bevorzugten Ausgestaltung der erfindungsgemäßen Beleuchtungseinrichtung umgreift die Halterung den Lichtleiter im Kantenbereich des Lichtleiters zumindest teilweise. Die Halterung weißt beispielsweise einen Aufnahmebereich auf, der auf den Lichtleiter aufgesetzt werden kann bzw. in die der Lichtleiter eingeschoben werden kann. Dies vereinfacht eine verlässliche Relativpositionierung zwischen dem Lichtleiter einerseits und der Halterung bzw. der darin angeordneten Beleuchtungsquelle andererseits, womit eine zuverlässige und effektive Einkopplung von Licht der Beleuchtungsquelle in den Lichtleiter und damit zuverlässige Abstrahleigenschaften bei hoher Effizienz erreicht werden.

Gemäß einer weiteren bevorzugten Ausgestaltung der erfindungsgemäßen Beleuchtungseinrichtung ist die Halterung als Rahmen ausgebildet, die den Lichtleiter entlang des Kantenbereichs des Lichtleiters zumindest abschnittsweise, vorzugsweise im Wesentlichen vollständig umläuft. Die Halterung kann also als innerhalb des Randverbundes verlaufender Rahmen angesehen werden. Weist die Scheibenanordnung beispielsweise eine rechteckige Geometrie auf, kann beispielsweise im Bereich von allen vier Seiten oder Kanten der Scheibenanordnung bzw. des Lichtleiters die Halterung umlaufend vorgesehen werden.

Grundsätzlich kann die Beleuchtungsquelle nur in den Abschnitten vorgesehen werden, in denen einen Einkopplung von Licht in den Lichtleiter gewünscht ist. Es können somit auch Teile oder Abschnitte der Halterung frei, das heißt ohne Beleuchtungsquelle, bleiben.

Gemäß einer weiteren bevorzugten Ausgestaltung der erfindungsgemäßen Beleuchtungseinrichtung ist die Halterung als Metallprofil, insbesondere als Aluminiumprofil, ausgebildet. Durch eine derartige Ausbildung der Halterung werden zum einen eine stabile Struktur und damit eine verlässliche Positionierung ermöglicht. Zum anderen wird durch die Wärmeleitfähigkeit des Metallprofils und insbesondere eines Aluminiumprofils eine effektive Wärmeableitung der durch den Betrieb der Beleuchtungsquelle entstehenden Wärme erreicht.

Alternativ oder zusätzlich kann jedoch auch ein zusätzliches Wärmeleitglied zur Verbesserung der Wärmeübertragung, beispielsweise eine Wärmeleitpaste, ein Wärmeleitpad oder eine metallische Verbindung, eingesetzt werden, beispielsweise zwischen der Halterung und einem hieran angrenzenden Bauteil.

Gemäß einer weiteren bevorzugten Ausgestaltung der erfindungsgemäßen Beleuchtungseinrichtung ist die Halterung derart ausgebildet, dass die Wärme der Beleuchtungsquelle durch die Halterung abgeführt wird. Wie bereits ausgeführt kann dies insbesondere durch die Materialwahl der Halterung als passive Kühlung erfolgen. Allerdings sind auch andere Gestaltungen, beispielsweise eine in die Halterung integrierte aktive Kühlung. Es hat sich aber gezeigt, dass beispielsweise im Falle der Ausbildung der Halterung aus Metall, insbesondere Aluminium, keine weitere oder aktive Kühlung erforderlich ist und die Wärmeableitung ausschließlich durch das Material der Halterung erfolgen kann.

Gemäß einer weiteren bevorzugten Ausgestaltung der erfindungsgemäßen Beleuchtungseinrichtung ist die Halterung mehrteilig, insbesondere im Querschnitt gesehen zumindest aus einem dem Lichtleiter zugewandten Teil und einem aus einem dem Lichtleiter abgewandten Teil, ausgebildet. Eine derartige Ausbildung ermöglicht es, die Beleuchtungseinrichtung auf einfache Weise in die Halterung einzubauen oder auch auszutauschen (beispielsweise im Falle eines Defekts). Beispielsweis ist die Halterung im Querschnitt gesehen aus zwei Halterungshälften ausgebildet. Beispielsweise sind die Teile der Halterung durch (insbesondere lösbare) Verbindungsmittel, beispielsweise Schrauben, miteinander verbunden. Andere Verbindungen der Teile der Halterung durch Formschluss, Stoffschluss und/oder Kraftschluss sind jedoch ebenfalls möglich.

Gemäß einer weiteren bevorzugten Ausgestaltung der erfindungsgemäßen Beleuchtungseinrichtung umfasst die Scheibenanordnung ein Mehrscheiben-Isolierglas, wobei der Lichtleiter Teil des Mehrschieben-Isolierglases ist. Unter einem Mehrscheiben-Isolierglas (kurz MIG), auch als Wärmedämmverglasung oder Isolierverglasung bezeichnet, wird ein aus mindestens zwei Scheiben zusammengesetztes Bauelement, insbesondere für Fenster, aber auch für andere Verglasungen und Einsatzzwecke verstanden. Zwischen den Scheiben befindet sich ein Hohlraum, der vorzugsweise gas- und feuchtigkeitsdicht verschlossen ist und der Schall- und Wärmedämmung dient. Ebenfalls ist jedoch denkbar, dass die Scheibenanordnung beispielsweise als einfache Doppelverglasung (ohne Luftabschluss) ausgebildet ist. Insbesondere bei derartigen Mehrfachverglasungen ermöglicht die erfindungsgemäße Beleuchtungseinrichtung eine präzise und platzsparende Integration der Beleuchtungsquelle in den Randverbund der Scheibenanordnung.

Gemäß einer weiteren bevorzugten Ausgestaltung der erfindungsgemäßen Beleuchtungseinrichtung umfasst die Scheibenanordnung eine oder mehrere Scheiben aus Glas und/oder eine oder eine oder mehrere Scheiben aus Kunststoff. Ein geeigneter Kunststoff ist beispielsweise ein transparenter (beispielsweise thermoplastischer) Kunststoff, beispielsweise Polymethylmethacrylat (PMMA, Acrylglas). In einem Beispiel umfasst die als MIG ausgebildete Scheibenanordnung einen mittigen Lichtleiter aus PMMA und beidseitig hiervon jeweils eine außenliegende Glasscheibe.

Gemäß einer weiteren bevorzugten Ausgestaltung der erfindungsgemäßen Beleuchtungseinrichtung weist der Lichtleiter eine Mikrostruktur zur flächigen Auskopplung des in den Lichtleiter eingekoppelten Lichts der Beleuchtungsquelle auf.

Durch eine Mikrostruktur auf dem Lichtleiter kann eine definierte Auskopplung des in den Lichtleiter eingekoppelten Lichts der Beleuchtungsquelle erfolgen. Dabei können die gewünschten Eigenschaften im Wesentlichen durch die Ausbildung der Mikrostruktur beeinflusst werden. Die Mikrostruktur kann beispielsweise integral mit dem Lichtleiter ausgebildet sein (beispielsweise auf diesen aufgeprägt sein) oder durch eine zusätzliche Schicht (etwa eine auf den Lichtleiter aufgebrachte Folie) auf diesem vorgesehen sein. Alternativ oder zusätzlich ist es jedoch auch möglich, dass andere Scheiben der Scheibenanordnung als der Lichtleiter selbst eine Mikrostruktur aufweisen können.

Gemäß einer weiteren bevorzugten Ausgestaltung der erfindungsgemäßen Beleuchtungseinrichtung ist die Halterung derart in den Randverbund integriert, dass der Randverbund gas- und/oder wasserdicht ist. Eine Gas- und/oder Wasserdichtigkeit des Randverbundes wird so trotz der Halterung nicht beeinträchtigt, sodass die Hohlräume zwischen den einzelnen Scheiben gegenüber der Umgebung isoliert werden können. Hierdurch eignet sich die beschriebene Beleuchtungseinrichtung besonders für die Verwendung in Zusammenhang mit Mehrscheiben-Isolierglas. Beispielsweise schließt sich die Halterung unmittelbar an Dichtungselemente des Randverbundes an, sodass die Dichtungselemente die Dichtigkeit zwischen der Halterung und Scheiben der Scheibenanordnung gewährleisten.

Gemäß einer weiteren bevorzugten Ausgestaltung der erfindungsgemäßen Beleuchtungseinrichtung umfasst die Beleuchtungsquelle Leuchtdioden, insbesondere eine oder mehrere LED-Platinen. Beispielsweise ist die Beleuchtungsquelle ausschließlich durch Leuchtdioden realisiert. Der Aufnahmebereich der Halterung ist in diesem Fall an die Geometrie der LED-Platine angepasst, sodass diese in einer definierten Position und Orientierung in der Halterung und damit zum Lichtleiter aufgenommen werden kann.

Gemäß einer weiteren bevorzugten Ausgestaltung der erfindungsgemäßen Beleuchtungseinrichtung umfasst der Randverbund einen oder mehrere Abstandshalter zwischen jeweils zwei benachbarten Scheiben der Scheibenanordnung. Die Abstandshalter dienen, beispielsweise im Falle von Mehrscheiben-Isolierglas, für einen definierten Abstand der einzelnen Scheiben der Scheibenanordnung.

Gemäß einer weiteren bevorzugten Ausgestaltung der erfindungsgemäßen Beleuchtungseinrichtung weist der Randverbund weiterhin ein oder mehrere Dichtungselemente, insbesondere Silikondichtungselemente, auf, insbesondere zwischen der Halterung einerseits und einer oder mehrere Scheiben des Scheibenverbundes andererseits. Die Dichtungselemente sind beispielsweise elastisch ausgebildet. Die Dichtungselemente ermöglichen insbesondere eine gas- und/oder wasserdichte Realisierung des Randverbundes trotz des Vorsehens einer Halterung für die Beleuchtungsquelle im Randverbund.

Die Verbindung zwischen einzelnen Scheiben der Scheibenanordnung (insbesondere zwischen dem Lichtleiter und äußeren Scheiben) ist vorzugsweise dazu ausgebildet, thermische Verformungen (beispielsweise aufgrund eines Aufheizens des Lichtleiters) durch eine elastische Ausbildung der Verbindung (das heißt beispielsweise der Abstandshalter und/oder der Dichtungselemente) aufzunehmen.

Gemäß einer weiteren bevorzugten Ausgestaltung der erfindungsgemäßen Beleuchtungseinrichtung weist die Halterung eine Dicke von höchstens 10mm, bevorzugt höchstens 8mm, weiter bevorzugt höchstens 6,5mm auf. Bei einer entsprechend geringen Aufbauhöhe der Halterung kann diese insbesondere bündig in den Randverbund der Scheibenanordnung integriert werden, das heißt im Wesentlichen ohne dass es zu einer Vergrößerung des Randverbundes kommt bzw. ohne dass Teile oder Abschnitte der Halterung aus der Scheibenanordnung herausragen.

Gemäß einer weiteren bevorzugten Ausgestaltung der erfindungsgemäßen Beleuchtungseinrichtung weist die Halterung eine Breite von höchstens 30mm, bevorzugt höchstens 20mm, weiter bevorzugt höchstens 18mm auf. Bei entsprechend geringen Breiten der Halterung kann die Halterung auch bei geringem Abstand einzelner Scheiben der Scheibenanordnung in den Randverbund integriert werden, ohne dass es zu einer Vergrößerung der Randverbundes kommt bzw. ohne dass Teile oder Abschnitte der Halterung aus der Scheibenanordnung herausragen.

Gemäß einem zweiten Aspekt der vorliegenden Erfindung wird die eingangs angegebene Aufgabe auch durch eine Verwendung einer erfindungsgemäßen Beleuchtungseinrichtung in einem Fenster, einer transparenten oder teilopaken Trennwand, einem Deckenelement oder einem freistehenden Glaselement gelöst. Die beschriebene Beleuchtungseinrichtung eignet sich vor allem aufgrund der in den Randverbund integrierten Halterung besonders für den Einsatz in derartigen Elementen.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekte als offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Insbesondere sollen Merkmale, die in den Figuren enthalten sind, keineswegs als notwendiger Bestandteil der vorliegenden Erfindung erachtet werden.

In der Zeichnung zeigt
- Fig. 1: eine vergrößerte Teilansicht eines Ausführungsbeispiels einer erfindungsgemäßen Beleuchtungseinrichtung im Querschnitt;
- Fig. 2a, b: zwei Seitenansichten des Ausführungsbeispiels der Fig. 1;
- Fig. 3: eine weitere vergrößerte Teilansicht des Ausführungsbeispiels aus Fig. 1 im Querschnitt; und
- Fig. 4: eine vergrößerte Teilansicht eines weiteren Ausführungsbeispiels einer erfindungsgemäßen Beleuchtungseinrichtung im Querschnitt.

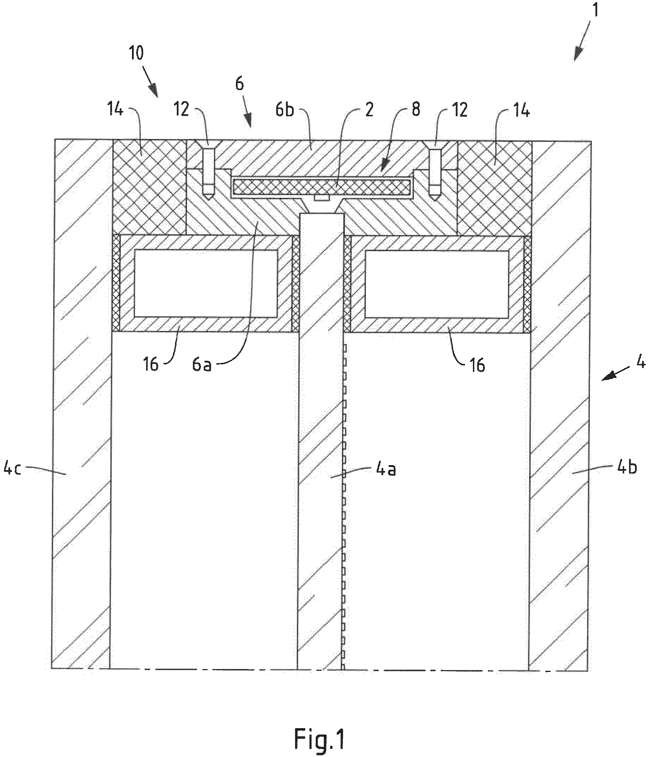

Fig. 1 zeigt eine vergrößerte Teilansicht eines Ausführungsbeispiels einer erfindungsgemäßen Beleuchtungseinrichtung 1 im Querschnitt. Die Beleuchtungseinrichtung wird in diesem Fall in einem freistehenden Glaselement 1 verwendet bzw. ist als ein solches ausgebildet. Die Beleuchtungseinrichtung 1 kann beispielsweise als Arbeitsplatzleuchte Verwendung finden.

Die Beleuchtungseinrichtung 1 weist eine Beleuchtungsquelle 2, die vorliegend als LED-Platine ausgebildet ist, und eine Scheibenanordnung 4, die vorliegend als Mehrscheiben-Isolierglas ausgebildet ist, auf. Die Scheibenanordnung umfasst in diesem Fall eine mittig angeordnete Scheibe als im Wesentlichen flächigen Lichtleiter 4a, in den Licht der Beleuchtungsquelle 2 eingekoppelt werden kann, und zwei äußere Scheiben 4b, 4c. Der Lichtleiter 4a ist eine (in diesem Fall einseitig) mikrostrukturierte PMMA-Scheibe (Dicke in diesem Fall etwa 3mm). Die Mikrostruktur ermöglicht eine flächige Auskopplung des in den Lichtleiter 4a eingekoppelten Lichts der Beleuchtungsquelle 2. Die äußeren Scheiben 4b, 4c sind in diesem Fall als Glasscheiben (Dicke etwa 4mm) ausgebildet.

Die Beleuchtungseinrichtung 1 weist weiterhin eine Halterung 6 für die Beleuchtungsquelle 2 auf, welche einen im Inneren der Halterung ausgebildeten Aufnahmebereich 8 zur Aufnahme der Beleuchtungsquelle 2 bildet und welche in den Randverbund 10 der Scheibenanordnung 4 integriert ist. Die Halterung 6 umgibt die Beleuchtungsquelle 2 im Wesentlichen vollständig. Der Aufnahmebereich 8 und die Beleuchtungsquelle 2 sind dabei derart aneinander angepasst, dass der Aufnahmebereich 8 die Beleuchtungsquelle 2 formschlüssig aufnimmt. Im Kantenbereich des Lichtleiters 4a umgreift die Halterung 6 den Lichtleiter 4a. Dabei ist die Beleuchtungsquelle 2 derart in dem Aufnahmebereich 8 der Halterung 6 aufgenommen, dass die Beleuchtungsquelle 2 einen vordefinierten Abstand, eine vordefinierte Position und eine vordefinierte Orientierung relativ zum flächigen Lichtleiter 4a aufweist. Im vorliegenden Fall wird die in dem Aufnahmebereich 8 angeordnete Beleuchtungsquelle 2 mit einem Abstand von etwa 1mm von dem Lichtleiter 4a und im Querschnitt gesehen im Wesentlichen mittig und vor und parallel zum dem Lichtleiter 4a angeordnet. Die hier nur im Schnitt dargestellte Halterung 6 ist als Aluminiumprofil ausgebildet, die den Lichtleiter 4a als Rahmen entlang des Kantenbereichs des Lichtleiters 4a im Wesentlichen vollständig umläuft. Die die Halterung 6 ist dazu geeignet, die Wärme der Beleuchtungsquelle 2 ausschließlich durch die Halterung 6 abzuführen.

Die Halterung 6 ist zweiteilig ausgebildet und im Querschnitt gesehen aus einem dem Lichtleiter 4a zugewandten Teil 6a und aus einem dem Lichtleiter 4a abgewandten Teil 6b hergestellt. Die beiden Teile 6a, 6b sind mittels Schrauben 12 miteinander verbunden. Der dem Lichtleiter zugewandte Teil 6a der Halterung 6 weist mittig eine (hier im Querschnitt gesehen trichterförmige) Öffnung auf, durch die das Licht der Beleuchtungsquelle 2 aus der Halterung 6 austreten und in den Lichtleiter 4a eingekoppelt werden kann.

Wie bereits erwähnt, ist die Halterung 6 in den Randverbund 10 integriert und dies derart, dass der Randverbund 10 gas- und wasserdicht ausgebildet ist. Dies wird insbesondere dadurch erreicht, dass der Randverbund 10 weiterhin Silikondichtungselemente 14 aufweist, die zwischen der Halterung 6 einerseits und der jeweils äußeren Scheiben 4b, 4c des Scheibenverbundes 4 andererseits angeordnet sind. Weiterhin weist der Randverbund 10 zwischen jeweils zwei benachbarten Scheiben der Scheiben 4a, 4b, 4c einen Abstandshalter 16 auf, welche im Vergleich zu den Silikondichtungen 14 und der Halterung 6 weiter innenliegend angeordnet sind. Insgesamt weist die Halterung 6 eine Dicke eine Dicke von etwa 13mm auf. Der Randverbund 10 weist insgesamt eine Breite von etwa 28mm, die gesamte Scheibenanordnung von etwa 36mm auf.

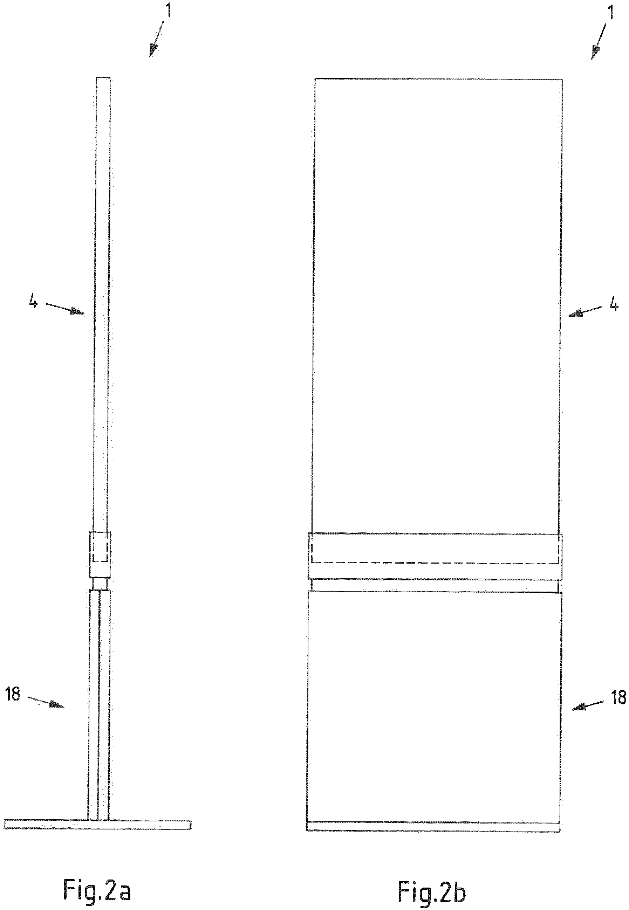

Fig. 2a, b zeigen nun zwei Seitenansichten des Ausführungsbeispiels der Fig. 1. Zu erkennen ist, dass die hier als freistehendes Glaselement eingesetzte Beleuchtungseinrichtung 1 weiterhin ein Bodenelement oder Standfuß 18 aufweist.

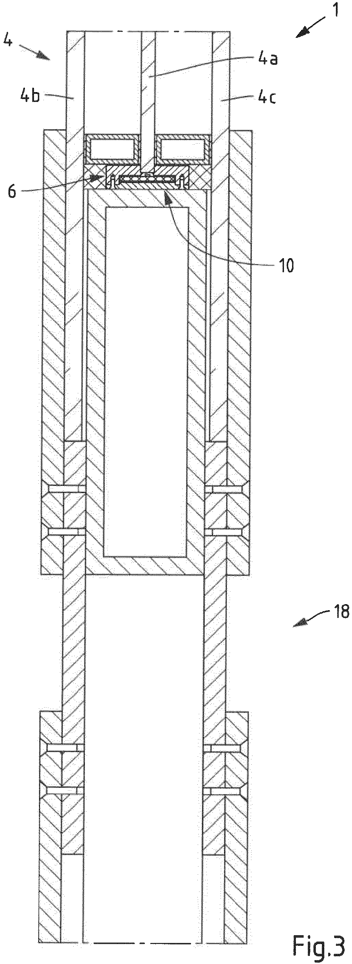

Fig. 3 zeigt eine weitere vergrößerte Teilansicht des Ausführungsbeispiels aus Fig. 1 bzw. Fig. 2 im Querschnitt, bei dem die Anbindung der Beleuchtungseinrichtung 1 an den Standfuß 18 dargestellt ist. Der Standfuß 18 bildet hierbei eine Aufnahme, sodass die Beleuchtungseinrichtung 1 stabil in dem Standfuß 18 eingefasst werden kann. Hierzu sind die beiden äußeren Scheiben 4b, 4c der Scheibenanordnung 4 über den Randverbund 10 hinaus verlängert.

Auch wenn die Erfindung zuvor beispielhaft anhand eines freistehenden Glaselements beschrieben wurde, sind die obigen beispielhaften Ausführungen gleichermaßen für andere Verwendungen der Beleuchtungseinrichtung anwendbar, beispielsweise in einem Fenster, einem Deckenelement oder einer Trennwand.

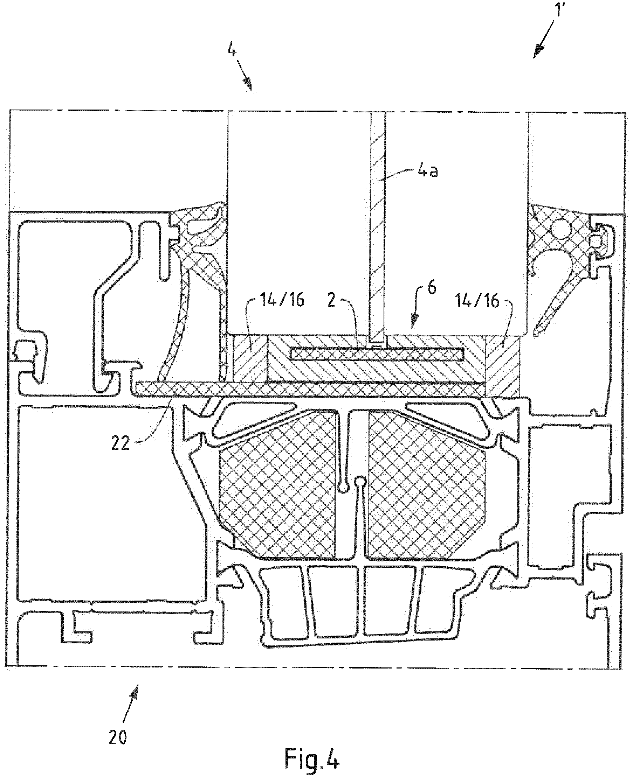

So zeigt Fig. 4 eine vergrößerte Teilansicht eines weiteren Ausführungsbeispiels einer erfindungsgemäßen Beleuchtungseinrichtung 1' im Querschnitt, wobei die Beleuchtungseinrichtung in diesem Fall in einem Fensterrahmen, speziell in einem Aluminium-Fensterrahmen 20 zum Einsatz kommt. Dabei werden gleiche Elemente mit gleichen Bezugszeichen versehen. Die Beleuchtungseinrichtung 1' der Fig. 4 kann wie die bereits beschriebene Beleuchtungseinrichtung 1 der Fig. 1 - 3 aufgebaut sein. Im Folgenden soll daher nur auf die Unterschiede eingegangen werden. So ist bei der Beleuchtungseinrichtung 1' auf der von der Scheibenanordnung abgewandten Seite der Halterung 6 zusätzlich ein Wärmeleitglied 22, in diesem Fall eine Wärmeleitpaste oder ein Metallelement, vorgesehen ist. Durch den Kontakt mit der Halterung und einem Teil des Aluminium-Fensterrahmens verbessert diese zusätzlich die Wärmeableitung der Beleuchtungsquelle 2 zum Aluminiumrahmen 20.

Weiterhin sind in diesem Fall keine separaten Abstandshalter vorgesehen. Die mit Elemente 14/16 zwischen der Halterung und den äußeren Scheiben 4b, 4c dienen zusammen mit der Halterung 6 sowohl als Abstandshalter als auch als Dichtungselemente. Die Elemente 14/16 können wie die bereits zuvor beschriebenen Dichtungselemente beispielsweise aus Silikon hergestellt sein. Insbesondere kann die Verbindung zwischen den äußeren Scheiben 4b, 4c und dem Lichtleiter 4a (in diesem Fall über die Elemente 14/16) für den Fall einer gewissen Aufheizung des Lichtleiters 4a theremische Verformungen durch entsprechende Elastizität aufnehmen.

## Patentansprüche

1. Beleuchtungseinrichtung (1, 1') mit
- einer Beleuchtungsquelle (2) und
- einer Scheibenanordnung (4) zumindest umfassend einen im Wesentlichen flächigen Lichtleiter (4a), in den Licht der Beleuchtungsquelle (2) eingekoppelt werden kann,
**dadurch gekennzeichnet,**
- **dass** die Beleuchtungseinrichtung (1, 1') weiterhin eine Halterung (6)für die Beleuchtungsquelle (2) aufweist,
- wobei die Halterung (6) einen im Inneren der Halterung (6) ausgebildeten Aufnahmebereich (8) zur Aufnahme der Beleuchtungsquelle (2) umfasst, und
- wobei die Halterung (6) in einen Randverbund (10) der Scheibenanordnung (4) integriert ist.

2. Beleuchtungseinrichtung nach Anspruch 1,
**dadurch gekennzeichnet,**
**dass** der Aufnahmebereich (8) und die Beleuchtungsquelle (2) derart aneinander angepasst sind, dass der Aufnahmebereich (8) die Beleuchtungsquelle (2) im Wesentlichen formschlüssig aufnimmt.

3. Beleuchtungseinrichtung nach einem der vorhergehenden Ansprüche,
**dadurch gekennzeichnet,**
**dass** die Beleuchtungsquelle (2) derart in dem Aufnahmebereich (8) der Halterung (6) aufgenommen ist, dass die Beleuchtungsquelle (2) einen vordefinierten Abstand, eine vordefinierte Position und/oder eine vordefinierte Orientierung relativ zum flächigen Lichtleiter (4a) aufweist.

4. Beleuchtungseinrichtung nach einem der vorhergehenden Ansprüche,
**dadurch gekennzeichnet,**
- **dass** die in dem Aufnahmebereich (8) angeordnete Beleuchtungsquelle (2) mit einem Abstand von weniger als 10 mm, vorzugsweise weniger als 5mm, weiter vorzugsweise weniger als 1mm von dem Lichtleiter (4a) angeordnet ist, und/oder
- **dass** die in dem Aufnahmebereich (8) angeordnete Beleuchtungsquelle (2) im Querschnitt gesehen im Wesentlichen mittig vor dem Lichtleiter (4a) angeordnet ist, und/oder
- **dass** die in dem Aufnahmebereich (8) angeordnete Beleuchtungsquelle (2) im Querschnitt gesehen im Wesentlichen parallel zum Lichtleiter (4a) angeordnet ist.

5. Beleuchtungseinrichtung nach einem der vorherigen Ansprüche,
**dadurch gekennzeichnet,**
- **dass** die Halterung (6) die Beleuchtungsquelle (2) im Wesentlichen vollständig umgibt, und/oder
- **dass** die Halterung (6) den Lichtleiter (4a) im Kantenbereich des Lichtleiters (4a) zumindest teilweise umgreift, und/oder
- **dass** die Halterung (6) als Rahmen ausgebildet ist, die den Lichtleiter (4a) entlang des Kantenbereichs des Lichtleiters (4a) zumindest abschnittsweise, vorzugsweise im Wesentlichen vollständig umläuft, und/oder
- **dass** die Halterung (6) als Metallprofil, insbesondere als Aluminiumprofil, ausgebildet ist, und/oder.
- **dass** die Halterung (6) derart ausgebildet ist, dass die Wärme der Beleuchtungsquelle (2) durch die Halterung (6) abgeführt wird.

6. Beleuchtungseinrichtung nach einem der vorherigen Ansprüche,
**dadurch gekennzeichnet,**
**dass** die Halterung (6) mehrteilig ausgebildet ist, insbesondere im Querschnitt gesehen zumindest aus einem dem Lichtleiter zugewandten Teil (6a) und einem aus einem dem Lichtleiter abgewandten Teil (6b).

7. Beleuchtungseinrichtung nach einem der vorherigen Ansprüche,
**dadurch gekennzeichnet,**
- **dass** die Scheibenanordnung (4) ein Mehrscheiben-Isolierglas umfasst, wobei der Lichtleiter (4a) Teil des Mehrschieben-Isolierglases ist, und/oder
- **dass** die Scheibenanordnung (4) eine oder mehrere Scheiben (4a, 4b, 4c) aus Glas und/oder eine oder eine oder mehrere Scheiben (4a, 4b, 4c) aus Kunststoff umfasst.

8. Beleuchtungseinrichtung nach einem der vorherigen Ansprüche,
**dadurch gekennzeichnet,**
**dass** der Lichtleiter (4a) eine Mikrostruktur zur flächigen Auskopplung des in den Lichtleiter (4a) eingekoppelten Lichts der Beleuchtungsquelle (2) aufweist.

9. Beleuchtungseinrichtung nach einem der vorherigen Ansprüche,
**dadurch gekennzeichnet,**
**dass** die Halterung (6) derart in den Randverbund (10) integriert ist, dass der Randverbund (10) gas- und/oder wasserdicht ist.

10. Beleuchtungseinrichtung nach einem der vorherigen Ansprüche,
**dadurch gekennzeichnet,**
**dass** die Beleuchtungsquelle (2) Leuchtdioden, insbesondere eine oder mehrere LED-Platinen, umfasst.

11. Beleuchtungseinrichtung nach einem der vorherigen Ansprüche,
**dadurch gekennzeichnet,**
- **dass** der Randverbund (10) einen oder mehrere Abstandshalter (16) zwischen jeweils zwei benachbarten Scheiben (4a, 4b, 4c) der Scheibenanordnung (4) umfasst, und/oder
- **dass** der Randverbund (10) weiterhin ein oder mehrere Dichtungselemente (14), insbesondere Silikondichtungselemente, aufweist, insbesondere zwischen der Halterung (6) einerseits und einer oder mehrere Scheiben (4a, 4b, 4c) des Scheibenverbundes (4) andererseits.

12. Beleuchtungseinrichtung nach einem der vorherigen Ansprüche,
**dadurch gekennzeichnet,**
- **dass** die Halterung (6) eine Dicke von höchstens 10mm, bevorzugt höchstens 8mm, weiter bevorzugt höchstens 6,5mm aufweist, und/oder
- **dass** die Halterung (6) eine Breite von höchstens 30mm, bevorzugt höchstens 20mm, weiter bevorzugt höchstens 18mm aufweist.

13. Verwendung einer Beleuchtungseinrichtung (1, 1') nach einem der vorherigen Ansprüche in einem Fenster, einer transparenten oder teilopaken Trennwand, einem Deckenelement oder einem freistehenden Glaselement.
